# EUROPEAN PATENT SPECIFICATION

(11) **EP 3 356 141 B1**
(45) Date of publication and mention of the grant of the patent: **27.10.2021**
(21) Application number: 16775597.4
(22) Date of filing: 23.09.2016
(51) Int. Cl.: B32B 27/08, B32B 27/30, B32B 27/32, C08L 23/08

(54) **COEXTRUDED STRUCTURES FOR COLLATION SHRINK FILMS**
COEXTRUDIERTE STRUKTUREN FÜR KOLLATIONSSCHRUMPFFOLIEN
STRUCTURES CO-EXTRUDÉES POUR COLLATION DE FILMS RÉTRÉCISSABLES

(30) Priority: 02.10.2015 EP 15188034
(43) Date of publication of application: 08.08.2018
(73) Proprietor: Borealis AG, 1220 Vienna (AT)
(72) Inventor: NIEDERSÜSS, Peter, 4312 Ried/Riedmark (AT); GENSOUS, Audrey, 40100 Dax (FR); DE WEVER, Willem, 3500 Hasselt (BE); MANDARD, Barbara, 1460 Ittre (BE)
(74) Representative: Dehns
(86) International application number: PCT/EP2016/072627
(87) International publication number: WO 2017/055174

(56) References cited:
- EP-A1- 1 941 998
- EP-A1- 2 875 948
- WO-A1-2013/081742
- US-A1- 2005 064 161

## Description

This invention is related to coextruded film structures having at least two polyethylene based layers, whereby the film structure has been uniaxially stretched in the machine direction (MDO - Machine Direction Orientation) and its use for collation shrink films as well as to collation shrink-wrapped structures comprising the aforementioned film shrink wrapped around various items.

### Background of the Invention

Collation shrink films are films that are wrapped around an object to be packaged and shrunk to keep the units within the object together. The most common use of these films is in the packaging of multiple containers (items), such as bottles or cans which might contain food, beverages and so on. The collation shrink film is wrapped around a number of the containers, perhaps a 6-pack of drinks or 24-pack of food cans optionally held in a cardboard tray or pad and shrunk around the containers.

The basic principle of collation shrink is to over-wrap a number of items in a loose film "sleeve" and then pass the wrapped goods through a heated shrink tunnel/oven to cause the collation shrink wrapping to occur. The film collapses around the multiple items and holds them in place.

Films which are used as collation shrink films obviously need to possess certain properties to make them technically and commercially interesting.

An obvious main characteristic that is required in this application field is good shrinkage behaviour. Furthermore suitable films need to be stiff, especially in view of down-gauge ability and pack stability. Puncture resistance and tear resistance are among the most important properties for collation shrink films in order to provide sufficient pack stability and to enable safe handling of the package.

As the consumer does not want that the packaged products stick to the film, suitable collation shrink films must not be sticky.

Sealing properties are also important. During the wrapping process, the two sides of the film are passed around the object being wrapped and are contacted, typically underneath the product being wrapped. These two film edges must be sealed and the seal strength needs to be high. The whole packaged ensemble is often carried simply by grabbing hold of the packaging film. If the seal strength is weak, the film can fail during this operation. The seal strength must ideally be strong enough to hold the weight of the object packaged. Where the object is a 24 pack of tins, for example, the weight can be significant.

Additionally optical properties such as low haze and high gloss that result in excellent display properties are important.

Low Density Polyethylene (LDPE) currently dominates the collation films market segment with its good shrink behaviour, especially in transverse direction (TD). It is known however, that multimodal LLDPE exhibits significant benefits over LDPE when blended with other linear low density polyethylene and high density polyethylene components.

This mixture offers the highest performance on all key shrink parameters for collation shrink films.

Thus, current collation shrink film solutions are polyethylene blown films which are made from LDPE and LLDPE and/or HDPE. The LDPE is necessary to give high shrink rate and the LLDPE / HDPE component gives a combination of stiffness, toughness and bundling force (also known as cold shrink force). Such solutions are for example provided by DOW, Exxon, Borealis, etc..

Film converters/manufacturers always seek for new solutions which provide films fulfilling the above requirements and additionally make collation shrink work more efficiently: e.g. by down-gauging, energy savings, reducing post-consumer waste, etc..

Down-gauging is nowadays limited to about 40µm for high quality packs. Below this film thickness the pack stability is compromised. Therefore it would be desirable to find films which allow even more down-gauging, e.g. down to about 30 µm or even lower, and still provide good pack stability, while meeting all other above described requirements.

Such a further down-gauging would also reduce the number of needed reel changes, since more running meters of the film can be located on one reel, which furthermore saves labour costs.

For down-gauging EP 2 653 392 suggests the use of uniaxially oriented multimodal LLDPE containing films to provide suitable collation shrink films which have thickness (before shrinkage) of less than 38 microns. Ideally, the present inventors of EP 2 653 392 sought to down gauge the films to approximately 28 to 32 µm. There is no indication in EP 2 653 392 if the described films fulfil the above described requirements of stiffness, gloss, haze, sealing, tear resistance, etc..

Energy savings could be achieved if the required temperature in the shrink tunnel or oven could be reduced while keeping all the above listed required properties inclusive good pack stability and seal strength. Lower temperatures mean lower costs and the product being packed is furthermore not exposed to the conventionally needed higher temperatures, which minimizes the risk of product degradation.

Also EP 2 653 392 addresses this topic. It is stated that the uniaxially oriented multimodal LLDPE containing films need lower temperature to effect shrinkage compared to non-oriented blown films. As stated above, there is no indication in EP 2 653 392 if the described films fulfil also the above described requirements of stiffness, gloss, haze, sealing, tear resistance, etc..

Also a lot of development work has been done in this rapidly expanding market, there remains a continuous need for improved films suitable for being used as collation shrink film, which can be further down-gauged while keeping an appropriate balance of mechanical and optical properties.

There is particularly a need for further materials which enable the production of MDO-films with high stiffness (i.e. high tensile modulus), excellent optical properties, high, respectively balanced tear resistance in machine and transverse direction and good sealing performance, which are suitable for down-gauged collation shrink films providing good pack stability even if used at lower shrink tunnel/oven temperatures than is conventionally used in a collation film shrink tunnel/oven.

US2005/064161 A1 discloses a multilayer film structure used in collation shrink films for secondary packaging of food or drinks, comprising a group of items wrapped by means of a film comprising an A/B/A structure, wherein the A layers are skin layers, which may be the same or different, each independently are selected from a blend comprising an mPE having a density of between about 0.910 to 0.940 g/cm3 and a HDPE, and the B is a core layer comprising a blend comprising an HDPE and an LDPE; and further comprising at least one layer between at least one of said A/B layers, said at least one layer selected from the group consisting of a tie layer, a reprocessed material layer, and a layer selected from blends comprising an HDPE and an LDPE. The film has typically a total thickness of less than 50 microns.

The present inventors have now found that a uniaxially oriented coextruded film structure having at least two layers, i.e. a layer comprising an ethylene based plastomer with a density of 860 kg/m3 to 915 kg/m3 (ISO 1183) and a tubular or autoclave low density polyethylene homopolymer with a density of 905 kg/m3 to 940 kg/m3 (ISO 1183) and a layer comprising a blend of a tubular or autoclave low density polyethylene with a density of density of 905 kg/m3 to 940 kg/m3 (ISO 1183) and a polyethylene polymer comprising ethylene and at least one C₄₋₂₀ alpha olefin comonomer and having a density of 900 kg/m3 to 960 kg/m3 (ISO 1183), which is not a plastomer, can fulfil all of the above described requirements.

### Summary of Invention

Therefore the present invention is related to a coextruded film structure comprising at least two polyethylene based layers A and B,
whereby layer A is a sealing layer comprising a blend of a-1) and a-4) and/or a-5) with a-1) being an ethylene based plastomer with a density of 860 kg/m3 to 915 kg/m3 (ISO 1183), a-4) being a tubular or autoclave low density polyethylene homopolymer with a density of 905 kg/m3 to 940 kg/ m3 (ISO 1183) and a-5) being a polyethylene polymer comprising ethylene and at least one C₄₋₂₀ alpha olefin comonomer and having a density of 900 kg/m3 to 960 kg/m3 (ISO 1183); and layer B comprising a blend of b-1) a tubular or autoclave low density polyethylene with a density of density of 905 kg/m3 to 940 kg/m3 (ISO 1183) and b-2) a polyethylene polymer comprising ethylene and at least one C₄₋₂₀ alpha olefin comonomer and having a density of 900 kg/m3 to 960 kg/m3 (ISO 1183),
whereby the coextruded film structure is oriented in machine direction in a draw ratio of 1:1.5 to 1:12 and having a film thickness after orientation of 10 to 50 µm and
whereby the coextruded film structure, being oriented in machine direction has the following properties (i) to (v)
   (i) a tensile modulus (according to ISO 527-3) in machine direction measured on a 25 µm and on a 40 µm uniaxially oriented blown film at room temperature of at least 400 MPa
   ii) a tensile modulus (according to ISO 527-3) in transverse direction measured on a 25 µm and on a 40 µm uniaxially oriented blown film at room temperature of at least 600 MPa
   iii) a tear resistance (according to ISO 6383-1, Trouser Tear Method) in machine direction and in transverse direction measured on a 25 µm and on a 40 µm uniaxially oriented blown film at room temperature of at least 70 N/mm and/or
      a difference of the tear resistance in machine direction and in transverse direction of such films of not more than 100 N/mm
   iv) a gloss (45°) according to ASTM D2457 measured on a 25 µm uniaxially oriented blown film of at least 60% and measured on a 40 µm uniaxially oriented blown film of at least 50% and
   v) a haze according to ASTM D1003 measured on a 25 µm uniaxially oriented blown film of below 10% and measured on a 40 µm uniaxially oriented blown film of below 15%.

In a further aspect the present invention is related to the use of the above defined coextruded film structure for collation shrink films as well as to collation shrink-wrapped structures comprising the aforementioned film shrink wrapped around various items.

In yet a further aspect the present invention is related to a process for collation shrink wrapping an object which comprises a plurality of preferably substantially identical items.

### Detailed description of Invention

The film according to the present invention comprises a coextruded film structure which is composed of at least two layers and uniaxially oriented in machine direction (MDO film).

The at least two layers are both composed of polyethylene polymers only, i.e. no other polymer than an ethylene based polymer is present.

Layer A is the sealing layer.

Layer A comprises a blend of a-1) and a-4) and/or a-5) with
a-1) being an ethylene based plastomer with a density of 860 kg/m³ to 915 kg/m³ (ISO 1183)
a-4) being a tubular or autoclave low density polyethylene homopolymer with a density of 905 kg/m³ to 940 kg/m³ (ISO 1183) and
a-5) being a polyethylene polymer comprising ethylene and at least one C₄-₂₀ alpha olefin comonomer and having a density of 900 kg/m³ to 960 kg/m³ (ISO 1183)

Layer B comprises a blend of
b-1) a tubular or autoclave low density polyethylene with a density of density of 905 kg/m³ to 940 kg/m³ (ISO 1183) and
b-2) a polyethylene polymer comprising ethylene and at least one C₄-₂₀ alpha olefin comonomer and having a density of 900 kg/m³ to 960 kg/m³ (ISO 1183).

### Layer A:

### Ad ethylene based plastomer

The ethylene based plastomer is a copolymer of ethylene and propylene or a C₄ - C₁₀ alpha olefin.

Suitable C₄ - C₁₀ alpha-olefin include 1-butene, 1-hexene and 1-octene, preferably 1-butene or 1-octene and more preferably 1-octene.

Preferably copolymers of ethylene and one of 1-butene, 1-hexene and 1-octene are used. More preferably copolymers of ethylene and 1-octene are used.

Suitable ethylene based plastomers have a density in the range of 860 kg/m³ to 915 kg/m³, preferably in the range of 870 kg/m³ to 910 kg/m³, more preferably in the range of 880 kg/m³ to 905 kg/m³.

The MFR₂ (ISO 1133; 190°C; 2.16kg) of suitable ethylene based plastomers is in the range of 0.5 - 30 g/10 min, preferably in the range of 0.6 - 20 g/10 min and more preferably in the range of 0.8 - 10.0 g/min.

The melting points (measured with DSC according to ISO 11357-3:1999) of suitable ethylene based plastomers are below 120°C, preferably below 115°C, more preferably below 110°C and most preferably below 100°C.

Furthermore suitable ethylene based plastomers can have a glass transition temperature Tg (measured with DMTA according to ISO 6721-7) of below -15°C, preferably below -20°C, more preferably below -25°C.

In case the copolymer is a copolymer of ethylene and propylene it has an ethylene content from 10 to 55 wt%, preferably from 15 to 50 wt% and more preferably from 18 to 48 wt%.

In case the copolymer is a copolymer of ethylene and a C₄ - C₁₀ alpha olefin it has an ethylene content from 60 to 95 wt%, preferably from 65 to 90 wt% and more preferably from 70 to 88 wt%.

The molecular mass distribution Mw/Mn of suitable ethylene based plastomers is most often below 4, such as 3.8 or below, but is at least 1.7. It is preferably between 3.5 and 1.8.

Suitable ethylene based plastomers can be any copolymer of ethylene and propylene or ethylene and C₄ - C₁₀ alpha olefin having the above defined properties, which are commercial available, i.a. from Borealis under the tradename Queo, from DOW Chemical Corp (USA) under the tradename Engage or Affinity, or from Mitsui under the tradename Tafmer.

Alternately these ethylene based plastomers can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons.

Preferably these ethylene based plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerization process is a high temperature solution polymerization process, using a polymerization temperature of higher than 100°C. Preferably the polymerization temperature is at least 110°, more preferably at least 150°C. The polymerization temperature can be up to 250°C.

The pressure in such a solution polymerization process is preferably in a range of 10 to 100 bar, preferably 15 to 100 bar and more preferably 20 to 100 bar.

The liquid hydrocarbon solvent used is preferably a C₅-₁₂-hydrocarbon which may be unsubstituted or substituted by C₁-₄ alkyl group such as pentane, methyl pentane, hexane, heptane, octane, cyclohexane, methylcyclohexane and hydrogenated naphtha. More preferably unsubstituted C6-10-hydrocarbon solvents are used.

A known solution technology suitable for the process according to the invention is the COMPACT technology.

The ethylene based plastomer may also contain antioxidants, process stabilizers, slip agents, pigments, UV-stabilizers and other additives known in the art.

### Ad tubular or autoclave low density polyethylene homopolymer (LDPE) a-4):

The low density polyethylene homopolymer (LDPE) to be used in the blend has been produced in a tubular reactor or by autoclave technique.

Polymerisation in tubular or autoclave reactor is well known and well documented in the literature in the polymerisation field.

Generally, the polymerization of the low density polyethylene (LDPE) is performed by reacting the monomers under the action of one or more radical initiators, such as peroxides, oxygen, azo compounds or combinations thereof, at a temperature of about 150 to 350°C and at a pressure of about 100 to 400 MPa preferably in a tubular reactor. The monomers are normally compressed in several stages up to the desired pressure before introduction into the reactor. The LDPE used according to the invention may be produced in a tubular reactor, as already stated above. A tubular reactor typically consists of several hundred meters of jacketed high pressure tubing arranged as a series of straight sections connected by 180° bends. Tubular reactors are either single-feed or multi-feed reactors, including split-feed reactors. In a single-feed tubular reactor (also referred to as front-feed reactor), the total monomer flow is fed to the inlet of the first reaction zone. In a multi-feed tubular reactor, the monomers are fed into the reactor at several locations along the reactor. In a split-feed reactor, the compressed monomer mixture are split into several streams and fed into the reactor at different locations thereof. Reaction is started by injection of the radical initiators. The reaction mixture cools after the first reaction peak and additional initiator is added to start a second reaction zone. The number of initiator injection points determines the number of reaction zones. A tubular reactor for production of ethylene polymers by high pressure radical polymerization usually comprises a total of two to five reaction zones. When the reaction is completed, the temperature and the pressure are lowered, typically in two steps using a high-pressure separator and a low-pressure separator. The resulting polymer is recovered and non-reacted monomers are either removed or recycled back to the reactor. As radical initiators, initiators commonly known in the art may be employed. Further details of the production of ethylene polymers by high pressure radical polymerization can be found for example in the Encyclopedia of Polymer Science and Engineering, Vol. 6 (1986), pp 383-410.

Suitable tubular technologies/processes are well known in the art. Examples are LyondellBasell Lupotech T, SABTEC CTR tubular LDPE technology, ExxonMobil Chemical's high pressure tubular process or DSM's 'Clean Tubular Reactor Technology'.

For the autoclave process the reaction pressure is typically in the range of 130 to 200 MPa. To bring the ethylene to this reaction pressure normally two compressors are used, which also take in unreacted recycle ethylene from the separators.

The autoclave reactor takes in the pressurized ethylene, to which organic peroxides are added to create free radicals, in order to initiate the polymerization process. This reaction propagates the formation of CH₂ polymer chains. The reactor mixer ensures even distribution of the polymerization process in the reactor.

The autoclave functions as an adiabatic continuous stirred-tank reactor (CSTR), with the heat of reaction being removed by the fresh ethylene entering the reactor.

Most modern reactors have two or more zones with increasing temperatures. The reaction temperatures are maintained constant by controlling the speeds of the pumps feeding initiators into the respective zones. The first zone is typically160°C up to 180°C and the final zone 290°C up to 310°C.

The free radical initiator is introduced in each of the different reactor zones to optimize productivity and performance.

The reaction is terminated at the bottom of the reactor and the LDPE melt exits for the high pressure (HP) and low pressure (LP) separators, where it is cooled, and unreacted ethylene is re-compressed and recycled back to the autoclave reactor, as mentioned above.

Low molecular weight polymers (wax, oils) are removed in other separators. The purified LDPE exits the LP separator and is then sent to the extruders where the melt is homogenized, more property enhancing additives are added, and the final product is pelletized and de-gassed before packaging and delivery.

Suitable autoclave technologies/processes are also well known in the art and are, for example, licensed by ExxonMobil, ICI (through Simon Carves), LyondellBasell (LUPOTECH A) or Versalis.

The meaning of low density polyethylene (LDPE) is well known and documented in the literature. Although the term LDPE is an abbreviation for low density polyethylene, the term is understood not to limit the density range, but covers the LDPE-like HP polyethylenes, which are produced by free-radical polymerization in a high-pressure process, with low, medium and higher densities. The term LDPE describes and distinguishes only the nature of HP polyethylene with typical features, such as different branching architecture, compared to the polyethylene produced in the presence of an olefin polymerization catalyst. Moreover, said low density polyethylene (LDPE) homopolymer, may be unsaturated.

As already outlined above, the low density polyethylene of the present invention has been produced in a tubular or autoclave reactor by radical initiated polymerization where the polymerization is performed by reacting the ethylene monomers under the action of one or more radical initiators, such as peroxides, oxygen or combinations thereof.

Preferably a low density polyethylene produced in a tubular reactor is used for the present invention.

The low density polyethylene of the present invention is a polyethylene having a density in the range of 905 to 940 kg/m³, more preferably in the interval of 910 to 935 kg/m³ and yet more preferably in the range of 915 to 930 kg/m³.

Preferably, the low density polyethylene of the present invention has a melt flow rate (MFR) according to ISO 1133 (190°C, 2.16 kg) in the range of 0.01 g/10 min to 10.0 g/10 min, more preferably in the range of 0.05 g/10 min to 5.0 g/10 min, yet more preferably in the range of 0.10 g/10 min to 2.0 g/10 min and most preferably in the range of 0.15 g/10 min to 1.5 g/10 min.

The LDPE may also contain antioxidants, process stabilizers, slip agents, pigments, UV-stabilizers and other additives known in the art.

### Ad polyethylene polymer (PE) a-5):

The polyethylene polymer of layer A has a density in the range of 900 to 960 kg/m³, preferably in the range of 910 to 950 kg/m³ and more preferably in the range of 920 to 940 kg/m³.

MFR₂ (190°C, 2.16 kg, ISO 1133) of suitable PE's is in the range 0.01 to 20 g/10min, preferably in the range of 0.05 to 10 g/10min, more preferably in the range of 0.1 to 6.0 g/10min and even more preferably in the range of 0.1 to 5.0 g/10min.

The weight average molecular weight Mw of the PE is preferably in the range of 100 000 to 200 000 g/mol,

The Mw/Mn of the PE can vary. Preferred Mw/Mn values are 3 or more, such as 6 or more, even 10 or more. Ranges of 3.5 to 30 are envisaged.

The PE contains at least one or two comonomer(s). Suitable comonomers are C₄-C₂₀ alpha-olefin comonomers. Thus the PE can be a copolymer of ethylene and one C₄-C₂₀ alpha-olefin comonomer or a terpolymer of ethylene and two different C₄-C₂₀ alpha-olefin comonomers. Preferred comonomers are C₄-C₁₀ alpha-olefins.

Preferably the comonomers are selected from the group of 1-butene, 1-hexene and 1-octene. It is preferred if the comonomer employed is 1-butene and/or 1-hexene. Preferred terpolymers comprise 1-butene and hexene comonomers.

The overall comonomer content in the total polymer is 0.3 to 7.0 % by mol, preferably 0.6 to 4.5 % by mol, more preferably 1.0 to 3.5 % by mol and most preferably 1.2 to 2.3 % by mol.

If the PE is a terpolymer of ethylene and two different C₄-C₂₀ alpha-olefin comonomers, preferably 1-butene and hexene, 1-butene is present in an amount of 0.1 to 3.0 % by mol, preferably 0.2 to 2.0 % by mol, more preferably 0.3 to 1.5 % by mol and most preferably 0.4 to 0.8 % by mol and hexene is present in an amount of 0.2 to 4.0 % by mol, preferably 0.4 to 2.5 % by mol, more preferably 0.7 to 2.0 % by mol and most preferably 0.8 to 1.5 % by mol.

The PE can be unimodal or multimodal, preferably multimodal. A unimodal PE possesses a single peak in its GPC spectrum as it is made in a single stage process.

It is most preferred if the PE is a multimodal PE, like bimodal PE, formed from a homopolymer component and a copolymer component, whereby the PE can be a copolymer as well as a terpolymer. These polymers are well known in the art and are available from Borealis and others.

Preferably such multimodal, like bimodal, PEs are produced in a multi-stage polymerization using the same catalyst. Thus, two slurry reactors or two gas phase reactors could be employed. Preferably however, such multimodal, like bimodal, PEs are made using a slurry polymerization in a loop reactor followed by a gas phase polymerization in a gas phase reactor.

A loop reactor - gas phase reactor system is well known as Borealis technology, i.e. a BORSTAR® reactor system. The bimodal polyethylene in the core layer is thus preferably formed in a two stage process comprising a first slurry loop polymerization followed by gas phase polymerization.

The conditions used in such a process are well known. For slurry reactors, the reaction temperature will generally be in the range 60 to 110°C (e.g. 85-110°C) , the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerization may if desired be effected under supercritical conditions. Slurry polymerization may also be carried out in bulk where the reaction medium is formed from the monomer being polymerized.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a nonreactive gas such as nitrogen or low boiling point hydrocarbons such as propane together with monomer (e.g. ethylene).

The PE of the invention can be produced using either Ziegler Natta catalysis or single site (metallocene) catalysis (mPE), but is preferably produced using a metallocene catalyst. Such catalysts are well known in the art.

The PE may also contain antioxidants, process stabilizers, slip agents, pigments, UV-stabilizers and other additives known in the art.

Layer A comprises at least a-1) the ethylene based plastomer and one or both of a-4) the LDPE and a-5) the PE.

Preferably layer A comprises either a blend of a-1) and a-4) or a blend of a-1) and a-5).

If layer A comprises a blend of a-1) and a-4) then the amount of a-1), the ethylene based plastomer is in the range of 20 to 60 wt% of layer A, preferably 30 to 50 wt% of layer A and more preferably 35 to 45 wt% of layer A and the amount of a-4), the autoclave or tubular LDPE is in the range of 80 to 40 wt% of layer A, preferably 70 to 50 wt% of layer A and more preferably 65 to 55 wt% of layer A.

If layer A comprises a blend of a-1) and a-5) then the amount of a-1), the ethylene based plastomer is in the range of 10 to 50 wt% of layer A, preferably 15 to 40 wt% of layer A and more preferably 20 to 35 wt% of layer A and the amount of a-5), the PE is in the range of 90 to 50 wt% of layer A, preferably 85 to 60 wt% of layer A and more preferably 80 to 65 wt% of layer A.

The blend for layer A may be prepared simply by mixing the components but to ensure homogeneity and hence no white spots, it will be appreciated that the components have to be compounded. This can be achieved by any conventional method known to those skilled in the art, e.g. extrusion or kneading.

For film formation using a polymer mixture it is important that the different polymer components be intimately mixed prior to extrusion and casting/blowing of the film as otherwise there is a risk of inhomogeneities, e.g. gels, appearing in the film. Thus, it is especially preferred to thoroughly blend the components, for example using a twin screw extruder, preferably a counter-rotating extruder, prior to extrusion and film blowing. Sufficient homogeneity can also be obtained by selecting the screw design for the film extruder such that it is designed for good mixing and homogenising.

The blend of layer A can also be an in-situ blend of a-1) and a-5), whereby a-1) and a-5) are blended in situ during the formation of such components in one or more polymerization reactors.

In this case ethylene and at least one comonomer are polymerized in the presence of a single-site (metallocene) catalyst in at least one reactor and furthermore in the presence of a single-site (metallocene) or Ziegler-Natta type catalyst in at least one other reactor. The reactors can be operated sequentially or in parallel.

For such in-situ blends a-5) is preferably produced in the presence of a Ziegler-Natta catalyst.

Such technology is known, e.g. under the name INSITE from DOW or disclosed in the literature, e.g. in WO 1994/01052.

### Layer B

Layer B comprises a blend of
b-1) a tubular or autoclave low density polyethylene with a density of density of 905 kg/m³ to 940 kg/m³ and
b-2) a polyethylene polymer comprising ethylene and at least one C₄-₂₀ alpha olefin comonomer and having a density of 900 kg/m³ to 960 kg/m³.

### Ad tubular or autoclave low density polyethylene (LDPE) b-1)

Suitable LDPEs for layer B are the same as described above for Layer A (component a-4)).

Again, preferably tubular LDPE is used

### Ad polyethylene polymer (PE) b-2)

Suitable PEs for layer B are the same as described above for Layer A (component a-5)). The PE being suitable for b-2) can be produced using Ziegler Natta catalysis or single site catalysis (mPE), but is in case of b-2 preferably produced using a Ziegler Natta catalyst. Such catalysts are well known in the art.

Preferably used for b-2) are bimodal terpolymers as described above.

Such preferred bimodal terpolymers are known in the state of the art and are described e.g. in WO 03/066698 or WO 2008/034630 or are commercially available, such as BorShape™ FX1001 and BorShape™ FX1002 (both from Borealis AG, Vienna, Austria)

The PE may again contain antioxidants, process stabilizers, slip agents, pigments, UV-stabilizers and other additives known in the art.

The amount of b-1), the autoclave or tubular LDPE is in the range of 50 to 90 wt% of layer B, preferably 60 to 80 wt% of layer B and more preferably 65 to 75 wt% of layer B and the amount of b-2), the PE is in the range of 10 to 50 wt% of layer B, preferably 20 to 40 wt% of layer B and more preferably 25 to 35 wt% of layer B.

The blend for layer B can be prepared as described for the blend of layer A.

Both layers can include additives usually used in this application field, like slip agents, antiblock agents, antistatic agents, antioxidants, UV stabilizers etc..

### Film structure

Films of the invention preferably comprise layers (A) and (B) as described above, optionally in combination with a layer (C), which is used as a blocking layer in the film production.

If no layer C is present then the preferred film structure is AB or ABA.

Such films can be produced in a manner known in the art. Suitable film lines are commercially available, for example from Windmöller & Holscher, Reifenhauser, Hosokawa Alpine, etc.

These may be 3-layer co-extrusion lines, but in some embodiments it may be appreciated that the used co-extruder is a 5 or 7 layer co-extrusion line.

In case a 5 or 7 layer co-extrusion line is used for the two or three layer coextruded film structure this could look like A/A/A/B/B, A/A/B/B/B, A/B/B/B/A or A/A/B/A/A or A/A/B/B/B/A/A, etc., which are still two or three-layer films

### Optional Layer C:

Layer C is preferably composed of a blend of the bimodal PE produced with a Ziegler Natta catalyst, as described above for b-2, and an ethylene based plastomer as described above or of a blend of the LDPE, as described above, and the ethylene based plastomer as described above.

The plastomer is preferably present in the blend in an amount of 20 to 80 wt%, more preferably in an amount of 40 to 75 wt% and even more preferably in an amount of 50 to 70 wt%.

Preferably the plastomer is blended with the PE.

It is also possible to use 100wt% plastomer for the blocking layer or any other ethylene based material known in the state of the art for being suitable in blocking layers, like EVA, EBA, mPE, etc..

The film thickness distribution (%) of an ABC layer film is preferably 10 to 40%/20 to 80%/10 to 40%, preferably 12 to 30%/40 to 76%/12 to 30%, of the total film thickness (100%).

In a further preferred embodiment, the films of the invention comprise at least five/six layers, preferably in the following order:
(i) a first outer layer (A),
(ii) a second outer layer (B),
(iii) a first inner layer (C),
(iv) a second inner layer (C),
(v) a third outer layer (B) and
(vi) a fourth outer layer (A)

These films are preferably formed from two identical ABC type films and it can be argued that the centre C layers merge to become one (and hence yield a 5 layer construction), leading to a so called blocked film structure. For an ABCCBA film structure the thickness of the layers may conform to 7.5-27.5%/15-35%/5-25%/15-35%/7.5-27.5%, wherein the total film thickness is 100% and the amount of core layer is the sum of two layers (C).

Each A, B or C layer may independent have a composition as hereinbefore defined. Ideally, the ABCCBA film is formed from two identical ABC films laminated together via their (C) layers.

Further possibilities of how a five or seven layer film could look like are for example ABBBCCBBBA and AABBBCCCCBBBAA.

### Ad Film preparation

The different polymer components in any of layers of the film are typically intimately mixed prior to layer formation, for example using a twin screw extruder, preferably a counter-extruder as described above.

Then the blends are converted into a coextruded film structure. Preferably, the blends are converted into a coextruded film structure on a blown-film line.

In order to manufacture such multilayer films according to the invention, normally at least two polymer melt streams are simultaneously extruded (i.e. coextruded) through a multi-channel tubular, annular or circular die to form a tube which is blown-up, inflated and/or cooled with air (or a combination of gases) to form a film. The manufacture of blown film is a well-known process.

The blown (co)extrusion can be effected at a temperature in the range 160°C to 240°C, and cooled by blowing gas (generally air) at a temperature of 10 to 50°C to provide a frost line height of 1 to 8 times the diameter of the die.

The blow up ratio should generally be in the range 1.2 to 6, preferably 1.5 to 4.

Preferably for ABCCBA type film structures, said film can advantageously be prepared first by coextruding compositions forming the layers (B), (C) and (A) through an annular die, blowing by blown extrusion into a tubular film to form a bubble. The formed bubble is then collapsed e.g. in nip rolls to form said film where layers (C) are contacted inside/inside, i.e. ABC/CBA. Alternatively, the coextruded bubble may be collapsed and split into two films.

The coextruded film structure is subjected to a subsequent stretching step, wherein the film is stretched in the machine direction (MDO). Stretching may be carried out by any conventional technique using any conventional stretching devices which are well known to those skilled in the art.

The MDO process can be done in-line, wherein the MDO unit is directly linked to the blown film unit, i.e. the film leaving the blown film line is directly transferred in the MDO unit.

The MDO process can be done in-line, wherein the MDO unit is directly linked to the blown film unit, i.e. the film leaving the blown film line is directly transferred in the MDO unit.

The MDO process can also be done off-line, wherein the MDO unit is an autonomous unit. In this case the film leaving the blown film line is first wound on a winder and is then supplied to the off-line MDO unit, where the film has to be unwound on a un-winder unit before it can be stretched.

The MDO process is preferably done in-line for blocked film structures.

During the MDO, the film obtained from the blown-film line is heated to an orientation temperature. Preferably, the temperature range for orientation can be 25K below the VICAT A-level of the (outer) film layer material up to the melting temperature of the (outer) film layer material. The heating is preferably performed utilizing multiple heating rollers.

Next, the heated film is fed into a slow drawing roll with a nip roller, which has the same rolling speed as the heating rollers. The film then enters a fast drawing roll. The fast drawing roll has a speed that is 2 to 10 times faster than the slow draw roll, which effectively orients the film on a continuous basis.

The oriented film then enters annealing thermal rollers, which allow stress relaxation by holding the film at an elevated temperature for a period of time.

The annealing temperature is preferably within the same temperature range as used for stretching or slightly below (e.g. 10 to 20K below), with room temperature being the lower limit. Finally, the film is cooled through cooling rollers to an ambient temperature.

The ratio of the film thickness before and after orientation is called "drawdown ratio" or stretch ratio.

The stretch ratio varies depending on many factors including the desired film thickness, film properties, and multilayer film structures.

The preparation process of the uniaxially oriented in MD monolayer or multilayer film of the invention comprises at least the steps of forming the monolayer or multilayer film and stretching the obtained monolayer or multilayer film in the machine direction in a draw ratio of 1:1.5 to 1:12, preferably in the range of 1:2.0 to 1:10, more preferably in the range of 1:2.5 to 1:8.

The film is stretched 1.5 to 12 times up its original length in the machine direction. This is stated herein as a stretch ratio of 1:1.5 to 1:12, i.e. "1" represents the original length of the film and "1.5" or "12" denotes that it has been stretched to 1.5 or 12 times that original length. An effect of stretching (or drawing) is that the thickness of the film is similarly reduced. Thus a stretch ratio of 1:1.5 or 1:12 preferably also means that the thickness of the film is less than 1.5 times or 12 times the original thickness.

After orientation, the first film of the invention has a film thickness of 10 to 50 µm, preferably 15 to 45 µm and more preferably 20 to 40 µm.

This means for example using a stretch ratio of 1:3 to yield a 40 µm film needs a primary film of 120 µm and using a stretch ratio of 1:12 to yield a 40 µm film needs a primary film of 480 µm.

The coextruded film structure, being oriented in machine direction has the following properties (i) to (v)
(i) a tensile modulus (according to ISO 527-3) in machine direction measured on a 25 µm and on a 40 µm uniaxially oriented blown film at room temperature of at least 400 MPa,
ii) a tensile modulus (according to ISO 527-3) in transverse direction measured on a 25 µm and on a 40 µm uniaxially oriented blown film at room temperature of at least 600 MPa,
iii) a tear resistance (according to ISO 6383-1, Trouser Tear Method) in machine direction and in transverse direction measured on a 25 µm and on a 40 µm uniaxially oriented blown film at room temperature of at least 70 N/mm,
   and/or a difference of the relative tear resistance in machine direction and in transverse direction of such films is not more than 100 N/mm and preferably not more than 90 N/mm,
iv) a gloss (45°) according to ASTM D2457 measured on a 25 µm uniaxially oriented blown film of at least 60%, preferably of at least 65% and measured on a 40 µm uniaxially oriented blown film of at least 50%, preferably of at least 60% and
v) a haze according to ASTM D1003 measured on a 25 µm uniaxially oriented blown film of below 10%, preferably below 9% and measured on a 40 µm uniaxially oriented blown film of below 15%, preferably below 13%.

Preferably the tensile modulus (according to ISO 527-3) in machine direction measured on a 25 µm uniaxially oriented blown film at room temperature is at least 450 MPa and more preferably at least 500 MPa and measured on a 40 µm uniaxially oriented blown film at room temperature is at least 420 MPa and more preferably at least 450 MPa.

The tensile modulus (according to ISO 527-3) in transverse direction measured on a 25 µm uniaxially oriented blown film at room temperature is preferably at least 650 MPa and more preferably at least 700 MPa and measured on a 40 µm uniaxially oriented blown film at room temperature is at least 620 MPa and more preferably at least 650 MPa.

The tear resistance (according to ISO 6383-1, Trouser Tear Method) in machine direction and in transverse direction measured on a 25 µm uniaxially oriented blown film at room temperature is preferably at least 100 N/mm and more preferably at least 120 N/mm and measured on a 40 µm uniaxially oriented blown film at room temperature is preferably at least 80 N/mm.

The difference of the relative tear resistance in machine direction and in transverse direction of such films (25 µm) is preferably not more than 50 N/mm and preferably not more than 20 N/mm and of films with 40 µm is preferably not more than 90 N/mm and preferably not more than 80 N/mm.

Furthermore such coextruded film structure, being oriented in machine direction, shows good shrinkage, sealing properties and pack stability when used as collation shrink film.

Thus the present invention is also related to the use of such coextruded film structure, being oriented in machine direction as collation shrink film, a collation shrink film being composed of the coextruded film structure, being oriented in machine direction as well as to collation shrink-wrapped structures comprising the aforementioned film shrink wrapped around various items.

### Collation Shrink Process

The collation shrink film of the invention can then be wrapped around an object in a conventional manner. The collation shrink film is typically supplied in a large roll. Film is dispensed from the roll, cut and placed over (i.e. above) the object to be wrapped. The film is obviously cut into appropriate lengths as it is dispensed from the roll.

Generally the object to be collation shrink wrapped will be present on a conveyor belt or other conveying means.

The wrapping process is a continuous process so the conveyor will contain a plurality of objects to be wrapped.

As each object moves along the conveyor, the collation shrink film is moved over the top of the object and then wrapped over it, down two opposite sides and underneath it using conventional equipment. The two ends of the film are therefore brought together and contacted underneath the object. These ends form a seal during the later shrink process or can be sealed using sealing bars as described later.

The other two sides of the object remain open but the film used will be wider than the object so that there will be film protruding around the open ends. In the shrink tunnel, this film folds in to wrap those open ends. A hole is still left in the "open ends" as is known, this is the so-called bull-eye.

It is preferred if the two sides of the object (i.e. the sides in addition to the top and bottom of the object) covered by the film are the long sides of the object.

Thus in a 3 x 2 can arrangement, it is the side of 3 cans which is covered and the side with 2 cans which remains open. Obviously, if the object is a square then there is no shorter side and it doesn't matter which side is which.

The wrapped object is then heated in some fashion to enable the collation shrink process and preferably also to seal the collation shrink film to itself underneath the object. Ideally, the wrapped object is passed through a heat tunnel in order to shrink the film around the object. The machine direction of the shrink tunnel is also the MD direction of the film.

Current shrink tunnels typically employ temperatures of 180 to 210°C. This exposes therefore the material being packaged to high temperature albeit for a short period of time. It is perceived however that these high temperatures are required to enable the necessary collation shrinkage properties and to effect a seal of the film underneath the object.

It is a major benefit of the use of the collation shrink films of the invention that commercially relevant levels of machine direction shrinkage can be achieved at much lower temperatures. The temperature to which the collation shrink films of this invention are exposed in the tunnel/oven may be up to 180°C, preferably up to 170°C, more preferably up to 160°C.

Note of course, that what matters here is the temperature which the film experiences. In order to make sure that the film experiences a particular temperature, it may be that the shrink tunnel has to be a little warmer than that temperature.

For current collation shrink films, low shrinkage temperatures, might however lead to poor film sealing, so that it may therefore be necessary to use sealing bars to effect a seal of the two ends of the collation shrink film of the invention. This may be carried out before the object is exposed to shrink temperatures.

Using the collation shrink films of the present invention provides still good sealing behaviour even at low shrink tunnel temperatures, i.e. up to 180°C.

Preferably the collation shrink films of the present invention are processed by a shrink tunnel temperature between 140 and 180°C.

In addition by using collation shrink films of the present invention good pack stability is ensured at these temperatures.

In general, this collation shrink wrapping process is known to the person skilled in the art.

Often the object to be wrapped comprising several items might be carried on a tray, such as a cardboard tray. In that case, the tray forms part of the object being wrapped.

The items (e.g. containers such as bottles or cans) will typically be arranged in a regular pattern such as a square or rectangle. Containers can have any cross-section such as circular (like bottles and cans), oval, square, rectangular or irregular. The smallest cross-section of any container is preferably at least 2 cm. The maximum cross-section is preferably 30 cm. Containers will not typically be stacked before wrapping. There will preferably be a single layer therefore of containers to be wrapped.

The present invention is thus furthermore related to a process for collation shrink wrapping an object which comprises a plurality of preferably substantially identical items.

This process is further characterized by:
(i) obtaining a collation shrink film comprising the above described coextruded film structure , said film structure being a stretched film which is uniaxially oriented in the machine direction (MD) in a draw ratio of at least 1:1.5;
(ii) wrapping said object comprising a plurality of individual items, i.e. product containers, preferably substantially identical product containers, comprising in said film structure and
(iii) heating said object wrapped in the film in order to collation shrink said film around said object.

### Applications

The collation shrink films of the present invention are preferably used in the wrapping of household, food, healthcare or beverage products, in particular products that are packaged in containers such as bottles, cans, tubs and the like.

Wherever a product is shipped in numerous essentially identical containers, the use of collation shrink film is useful to prevent damage to the products and keep the product secure during transport. The most common application is therefore in the beverage transportation market.

It will be appreciated that the collation shrink film might also be used to wrap industrial products such as chemicals and the like.

The invention will now be described with reference to the following non-limiting examples and figures.

### Experimental Part

### A) Methods:

### Tensile Modulus

### Film TD (transversal direction) and MD (machine direction)

Tensile moduli in machine and transverse direction were determined acc. to ISO 527-3 on films with a thickness of 25 µm or 40 µm at a cross head speed of 1 mm/min for the MDO blown film of the inventive examples.

### Trouser Tear Method

Applies for both, for the measurement in machine direction (MD) and transverse direction (TD). The tear resistance is measured using the ISO 6383-1 method.

A rectangular test specimen having a longitudinal slit extending over half its length is subjected to a tensile test on the "trouser legs" formed by the slit. The average force required to tear the specimen completely along its length is used to calculate the tear resistance of the material under test.
Test machine: Zwick Z1.0
Test specimens: .150 mm length, 50 mm width, 75 mm slit, thickness either 25 µm or 40 µm.
Calculate the tear resistance [N/mm] of the specimen from the formula Ft/d
Ft is the tearing force [N] of the specimen
d is the thickness [mm] of the specimen

**Gloss, clarity** and **haze** as measures for the optical appearance of the films were determined according to ASTM D2457 (gloss) and ASTM D1003 (haze and clarity) on machine direction oriented film samples with a thickness of 40 µm or 25 µm.

Gloss was determined according to ISO 2813 (ASTM D2457) at an angle of 20°, 45° and 60°.

### B) Materials used:

**FX1001:** bimodal Ziegler Natta produced terpolymer (C2/C4/C6) Grade BorShape™ (provided by Borealis AG). FX1001 has MFR₅ of 0.85 g/10 min, density of 931 kg/m³. (LLDPE)
**FX1002:** bimodal Ziegler Natta produced terpolymer (C2/C4/C6) Grade BorShape™ (provided by Borealis AG). FX1002 has MFR₅ of 2.0 g/10 min, density of 937 kg/m³. (LLDPE)
**FT5230:** low Density Polyethylene produced by Tubular Technology (provided by Borealis AG). FT5230 has MFR₂ of 0.75 g/10 min, density of 923 kg/m³.
**FT3200:** low Density Polyethylene produced by Tubular Technology (provided by Borealis AG). FT5230 has MFR₂ of 0.25 g/10 min, density of 920 kg/m³.
**FT5236:** low Density Polyethylene produced by Tubular Technology (provided by Borealis AG). FT5230 has MFR₂ of 0.75 g/10 min, density of 923 kg/m³.
**Queo™ 0201FX:** an ethylene based octene plastomer, Melt Flow Rate (190/2.16) of 1.1 g/10 min, unimodal, density 902 kg/m³, produced in a solution polymerization process using a metallocene catalyst. It contains 3000 ppm anti block agent and 1200 ppm slip agent, processing aid and stabilisers (provided by Borealis AG).
**Queo™ 8201:** ethylene based octene plastomer, MFR(190/2.16) of 1.1 g/10 min, unimodal, density 882 kg/m³, produced in a solution polymerization process using a metallocene catalyst provided by Borealis AG). It contains processing stabilizers.

### C) Film preparation:

Five films were produced on a commercial scale Alpine 7-layer extrusion blown film line with one extruder used for A, extruder 2 to 6 used for B and the 7^{th} extruder used for C, thus extruding a film structure of ABBBBBC, which is then collapsed (C on C) to yield ABCBA film structures. (also called ABCCBA)

Thickness distribution for the layers A, B and C in the 7 extruders was:
A: 15%
B: 14%
B: 14%
B: 14%
B: 14%
B: 14%
C: 15%
thus leading to 15%/70%/15% for the ABC films.

The ABC films were composed of:

### Inventive Example IE1:

Layer A: 60% FT5236 + 40% Queo 0201 FX
Layer B: 70% FT3200 + 30% FX1002
Layer C: 60% Queo 8201 + 40% FX1002

### Inventive Example IE2 + IE3:

Layer A: 60% FT5236 + 40% Queo 0201FX
Layer B: 70% FT5230 + 30% FX1001
Layer C: 60% Queo 8201 + 40% FX1002

### Inventive Example IE4 + IE5:

Layer A: 60% FT5236 + 40% Queo 0201FX
Layer B: 70% FT5230 + 30% FX1002
Layer C: 60% Queo 8201 + 40% FX1002

The films were produced by extrusion on commercial scale Alpine 7-layer extrusion blown film line with die diameter 300 mm, frost line height 3DD, at a blow up ratio (BUR) 1:3 and die gap 1.5 mm, with internal bubble cooling.

The extruder comprised seven extruders with 50 mm diameter and L/D 30.

Extruder temp setting: 200 - 215°C to form 70 resp. 45 µm films, which were then blocked to 140 resp. 90 µm films.

The so produced blown films where then transferred to an off-line MDO unit, manufactured by Hosokawa Alpine AG in Augsburg/Germany. The unit consists of preheating, drawing, annealing, and cooling sections, with each set at specific temperatures to optimize the performance of the unit and produce films with the desired properties. The preheating was at 90°C to 100°C, the stretching was done at 100°C, annealing was done at 95°C and 90°C and cooling was done at 60°C and 30°C.

The film obtained from blown film extrusion was pulled into the orientation machine, heated up on the heating rolls and then stretched between two sets of nip rollers where the second pair runs at higher speed than the first pair resulting in the desired draw ratio. Stretching is carried out with the respective draw ratios to reach the desired thickness. (draw ratios and final as well as starting thickness of MDO films are given in Table 1) After exiting the stretching machine the film is fed into a conventional film winder where the film is slit to its desired width and wound to form reels.

The properties of the MDO films are also given in Table 1:

| **property** | **unit** | **IE1** | **IE2** | **IE3** | **IE4** | **IE5** |
|---|---|---|---|---|---|---|
| Film thickness before MDO (blocked films) | µm | 140 (2x70) | 140 (2x70) | 90 (2x45) | 140 (2x70) | 90 (2x45) |
| DDR | | 1:3.5 | 1:3.5 | 1:3.5 | 1:3.5 | 1:3.5 |
| Film thickness after MDO | µm | 40 | 40 | 25 | 40 | 25 |
| tear resistance MD | N/mm | 136.1 | 76.9 | 141.2 | 83.0 | 130.6 |
| tear resistance TD | N/mm | 119.7 | 140.7 | 132.2 | 152.2 | 143.7 |
| Tensile modulus MD | MPa | 437 | 445 | 540 | 455 | 510 |
| Tensile modulus TD | MPa | 632 | 703 | 730 | 723 | 754 |
| Film inside (20°/45°/60°) MD | | | | | | |
| Gloss 20° | % | 43.7 | 84 | 61 | 88 | 73 |
| Gloss 45° | % | 52.3 | 74.8 | 65 | 74.6 | 68.2 |
| Gloss 60° | % | 76.8 | 105.5 | 91.8 | 106.5 | 97 |
| Clarity | % | 91.6 | 96.8 | 96.1 | 97 | 97 |
| Haze | % | 12.9 | 6.0 | 8.4 | 6.4 | 8.2 |

### Collation shrink Process

The sealing properties of the above produced MDO films were tested in a shrink tunnel of KHS (Innopack Kisters TSP Advanced tray shrink packer) at different oven temperatures between 130 and 180°C by visual inspection.

12 bottles (0.5l, positioned on a cardboard pad - configuration 4 x 3 bottles) were covered with the films of IE1 to IE5 and conveyed into the shrink tunnel. The shrink tunnel was equipped with the Fully Enclosed™ (FE) Filmpack option, meaning that shrink packs could be produced either with bull's eyes or with the sides fully closed. When running with the Fully Enclosed option, a hot air heat sealing device is used to provide the sealing.

Each film structure was tested twice at the same shrink tunnel temperature (average of ranking are given in table 2 - the second test was always confirming the first result)

The wrapped objects were rated visually according to the following criteria
0: no adhesion
1: partial adhesion
2: perfect adhesion & shrink holes
3: perfect adhesion & no holes

The results are shown in Table 2

**Table 2: sealing behaviour**

| | | Oven Temperature (°C) | | | | |
|---|---|---|---|---|---|---|
| Structure | 130 | 140 | 150 | 160 | 170 | 180 |
| IE1 | 1 | nt | 3 | 3 | 3 | 3 |
| IE2 | 0 | 1 | 3 | 3 | 3 | 3 |
| IE3 | nt | nt | 3 | 3 | nt | nt |
| IE4 | 0 | 1 | 1 | 3 | nt | nt |
| IE5 | 1 | 3 | 2 | 2 | nt | nt |

| | | | | | | |
|---|---|---|---|---|---|---|
| nt....not tested | | | | | | |

From this test it can be seen that the MDO films of the present invention show good sealing properties down to 150°C.

In the same way the inventive MDO films were tested visually regarding their pack stability. 12 bottles (0.5l, positioned on a cardboard pad - configuration 4 x 3 bottles)

The criteria were:
0: no adhesion
1: Not acceptable for too poor shrinkage
2: Not acceptable for too much shrinkage
3: acceptable/stable pack but with defects
4: acceptable/stable pack without defect

The results are shown in Table 3 (fully enclosed concept)

**Table 3: pack stability for fully enclosed concept**

| | Oven Temperature (°C) | | |
|---|---|---|---|
| Structure | 140 | 150 | 160 |
| IE1 | 0 | 2 | 1-2 |
| IE2 | 2 | 3 | 3 |
| IE3 | 0 | 0 | 3 |
| IE4 | 0 | 1 | 2 |
| IE5 | 2 | 3 | 2 |

From this test it can be seen that the MDO films of the present invention show good pack stability down to 150°C.

## Claims

1. Coextruded film structure comprising at least two polyethylene based layers A and B, whereby layer A is a sealing layer comprising a blend of a-1) and a-4) and/or a-5) with a-1) being an ethylene based plastomer with a density of 860 kg/m³ to 915 kg/m³ (ISO 1183)
a-4) being a tubular or autoclave low density polyethylene homopolymer with a density of 905 kg/m³ to 940 kg/m³ (ISO 1183) and
a-5) being a polyethylene polymer comprising ethylene and at least one C₄₋₂₀ alpha olefin comonomer and having a density of 900 kg/m³ to 960 kg/m³ (ISO 1183)
and layer B comprising a blend of
b-1) a tubular or autoclave low density polyethylene with a density of density of 905 kg/m³ to 940 kg/m³ (ISO 1183) and
b-2) a polyethylene polymer comprising ethylene and at least one C₄₋₂₀ alpha olefin comonomer and having a density of 900 kg/m³ to 960 kg/m³ (ISO 1183),
whereby the coextruded film structure is oriented in machine direction in a draw ratio of 1:1.5 to 1:12 and having a film thickness after orientation of 10 to 50 µm and
whereby the coextruded film structure, being oriented in machine direction has the following properties (i) to (v)
(i) a tensile modulus (according to ISO 527-3) in machine direction measured on a 25 µm and on a 40 µm uniaxially oriented blown film at room temperature of at least 400 MPa
ii) a tensile modulus (according to ISO 527-3) in transverse direction measured on a 25 µm and on a 40 µm uniaxially oriented blown film at room temperature of at least 600 MPa
iii) a tear resistance (according to ISO 6383-1, Trouser Tear Method) in machine direction and in transverse direction measured on a 25 µm and on a 40 µm uniaxially oriented blown film at room temperature of at least 70 N/mm and/or
a difference of the tear resistance in machine direction and in transverse direction of such films of not more than 100 N/mm
iv) a gloss (45°) according to ASTM D2457 measured on a 25 µm uniaxially oriented blown film of at least 60% and measured on a 40 µm uniaxially oriented blown film of at least 50% and
v) a haze according to ASTM D1003 measured on a 25 µm uniaxially oriented blown film of below 10% and measured on a 40 µm uniaxially oriented blown film of below 15%.

2. Coextruded film structure according to claim 1, wherein the ethylene based plastomer a-1) of layer A is characterized furthermore by
an MFR₂ (ISO 1133; 190°C, 2.16kg) in the range of 0.5 to 30 g/10 min,
a melting point (measured with DSC according to ISO 11357-3:1999) of below 130°C,
a comonomer selected from 1-butene, 1-hexene or 1-octene and
an ethylene content of 60 to 95 wt%.

3. Coextruded film structure according to claim 1, wherein the polyethylene polymer a-5) is produced with a metallocene catalyst and is further **characterized by**
an MFR₂ (ISO 1133; 190°C, 2.16kg) in the range of 0.01 to 20 g/10 min,
at least one comonomer selected from 1-butene, 1-hexene or 1-octene and
a comonomer content of 0.3 to 7.0 wt%.

4. Coextruded film structure according to any of the preceding claims 1 to 3, wherein layer A comprises either a blend of a-1) and a-4) wherein the amount of a-1), the ethylene based plastomer is in the range of 20 to 60 wt% of layer A and the amount of a-4), the autoclave or tubular LDPE is in the range of 80 to 40 wt% of layer A or
a blend of a-1) and a-5) wherein the amount of a-1), the ethylene based plastomer is in the range of 10 to 50 wt% of layer A and the amount of a-5), the PE is in the range of 90 to 50 wt% of layer A.

5. Coextruded film structure according to any of the preceding claims 1 to 4 wherein the polyethylene polymer b-2) is produced with a Ziegler-Natta catalyst and is further **characterized by**
an MFR₂ (ISO 1133; 190°C, 2.16kg) in the range of 0.01 to 20 g/10 min,
at least one comonomer selected from 1-butene, 1-hexene or 1-octene and
a comonomer content of 0.3 to 7.0 wt%.

6. Coextruded film structure according to any of the preceding claims 1 to 4, wherein the layer A comprises an in-situ blend of a-1) and a-5), whereby ethylene and at least one comonomer are polymerized in the presence of a single-site (metallocene) catalyst in at least one reactor and furthermore in the presence of a single-site (metallocene) or Ziegler-Natta type catalyst in at least one other reactor, whereby the amount of a-1), the ethylene based plastomer is in the range of 20 to 60 wt% of layer A, and the amount of a-5), the PE is in the range of 80 to 40 wt% of layer A.

7. Coextruded film structure according to any of the preceding claims 1 to 6 wherein layer B comprises an amount of b-1), the autoclave or tubular LDPE in the range of 50 to 90 wt% of layer B, and an amount of b-2), the PE in the range of 10 to 50 wt% of layer B.

8. Coextruded film structure according to any of the preceding claims 1 to 7, wherein the film structure furthermore comprise a layer C, being a blocking layer, whereby layer C is composed of 100 wt% of ethylene based plastomer as defined for a-1) or a blend of the bimodal PE produced with a Ziegler Natta catalyst, as defined for b-2, and an ethylene based plastomer as defined for a-1) or a blend of the LDPE, as defined for a-4), and the ethylene based plastomer as defined for a-1), whereby in the blends the plastomer is present in an amount of 20 to 80 wt%.

9. Use of a coextruded film structure according to any of the preceding claims 1 to 8, as collation shrink film.

10. Use according to claim 9, whereby the collation shrink film is used in a process for collation shrink wrapping an object which comprises a plurality of preferably substantially identical items.

11. Process for collation shrink wrapping an object **characterized by**:
(i) obtaining a collation shrink film comprising a coextruded film structure according to any of claims 1 to 8, said film structure being a stretched film which is uniaxially oriented in the machine direction (MD) in a draw ratio of at least 1:1.5;
(ii) wrapping said object comprising a plurality of individual items , preferably substantially identical items, in said collation shrink film and
(iii) heating said object wrapped in the film in order to collation shrink said film around said object.

12. Collation shrink-wrapped structures comprising a coextruded film structure according to any of claims 1 to 8 wrapped around various items.

## Patentansprüche

1. Coextrudierte Folienstruktur, die mindestens zwei Schichten A und B auf Polyethylen-Basis umfasst, wobei es sich bei Schicht A um eine Siegelschicht handelt, die ein Gemisch aus a-1) und a-4) und/oder a-5) umfasst, wobei
a-1) ein Plastomer auf Ethylen-Basis mit einer Dichte von 860 kg/m³ bis 915 kg/m³ (ISO 1183) ist,
a-4) ein Röhren- oder Autoklaven-Polyethylen-Homopolymer niedriger Dichte mit einer Dichte von 905 kg/m³ bis 940 kg/m³ (ISO 1183) ist, und
a-5) ein Polyethylen-Polymer ist, das Ethylen und mindestens ein C₄₋₂₀-Alpha-Olefin-Comonomer umfasst und eine Dichte von 900 kg/m³ bis 960 kg/m³ (ISO 1183) aufweist,
und Schicht B ein Gemisch umfasst aus
b-1) einem Röhren- oder Autoklaven-Polyethylen niedriger Dichte mit einer Dichte von 905 kg/m³ bis 940 kg/m³ (ISO 1183), und
b-2) einem Polyethylen-Polymer, das Ethylen und mindestens ein C₄₋₂₀-Alpha-Olefin-Comonomer umfasst und eine Dichte von 900 kg/m³ bis 960 kg/m³ (ISO 1183) aufweist,
wobei die coextrudierte Folienstruktur in Maschinenrichtung in einem Streckverhältnis von 1:1,5 bis 1:12 gereckt ist und eine Foliendicke nach Recken von 10 bis 50 µm aufweist, und
wobei die coextrudierte Folienstruktur, wenn sie in Maschinenrichtung gereckt ist, die folgenden Eigenschaften (i) bis (v) aufweist
(i) einen Zugmodul (nach ISO 527-3) in Maschinenrichtung, gemessen an einer 25 µm und an einer 40 µm uniaxial gereckten Blasfolie bei Raumtemperatur, von mindestens 400 MPa,
(ii) einen Zugmodul (nach ISO 527-3) in Querrichtung, gemessen an einer 25 µm und an einer 40 µm uniaxial gereckten Blasfolie bei Raumtemperatur, von mindestens 600 MPa,
(iii) eine Reißfestigkeit (nach ISO 6383-1, Hosenreiß-Verfahren) in Maschinenrichtung und in Querrichtung, gemessen an einer 25 µm und an einer 40 µm uniaxial gereckten Blasfolie bei Raumtemperatur, von mindestens 70 N/mm, und/oder eine Differenz der Reißfestigkeit in Maschinenrichtung und in Querrichtung solcher Folien von nicht mehr als 100 N/mm,
(iv) einen Glanz (45°) nach ASTM D2457, gemessen an einer 25 µm uniaxial gereckten Blasfolie, von mindestens 60% und, gemessen an einer 40 µm uniaxial gereckten Blasfolie, von mindestens 50 %, und
(v) eine Trübung nach ASTM D1003, gemessen an einer 25 µm uniaxial gereckten Blasfolie, von unter 10 % und, gemessen an einer 40 µm uniaxial gereckten Blasfolie, von unter 15 %.

2. Coextrudierte Folienstruktur nach Anspruch 1, wobei das Plastomer auf Ethylen-Basis a-1) von Schicht A weiter **gekennzeichnet ist durch**
eine MFR₂ (ISO 1133; 190 °C, 2,16 kg) im Bereich von 0,5 bis 30 g/10 min,
einen Schmelzpunkt (gemessen mit DSC nach ISO 11357-3:1999) von unter 130 °C, ein Comonomer, ausgewählt aus 1-Buten, 1-Hexen oder 1-Octen, und
einen Ethylen-Gehalt von 60 bis 95 Gew.-%.

3. Coextrudierte Folienstruktur nach Anspruch 1, wobei das Polyethylen-Polymer a-5) mit einem Metallocen-Katalysator hergestellt wird und weiter **gekennzeichnet ist durch** eine MFR₂ (ISO 1133; 190 °C, 2,16 kg) im Bereich von 0,01 bis 20 g/10 min, mindestens ein Comonomer, ausgewählt aus 1-Buten, 1-Hexen oder 1-Octen, und einen Comonomer-Gehalt von 0,3 bis 7,0 Gew.-%.

4. Coextrudierte Folienstruktur nach einem der vorstehenden Ansprüche 1 bis 3, wobei Schicht A
entweder ein Gemisch aus a-1) und a-4), wobei die Menge von a-1), dem Plastomer auf Ethylen-Basis, im Bereich von 20 bis 60 Gew.-% von Schicht A liegt, und die Menge von a-4), dem Autoklaven- oder Röhren-LDPE, im Bereich von 80 bis 40 Gew.-% von Schicht A liegt, oder
ein Gemisch aus a-1) und a-5) umfasst, wobei die Menge von a-1), dem Plastomer auf Ethylen-Basis, im Bereich von 10 bis 50 Gew.-% von Schicht A liegt, und die Menge von a-5), dem PE, im Bereich von 90 bis 50 Gew.-% von Schicht A liegt.

5. Coextrudierte Folienstruktur nach einem der vorstehenden Ansprüche 1 bis 4, wobei das Polyethylen-Polymer b-2) mit einem Ziegler-Natta-Katalysator hergestellt wird und weiter **gekennzeichnet ist durch**
eine MFR₂ (ISO 1133; 190 °C, 2,16 kg) im Bereich von 0,01 bis 20 g/10 min, mindestens ein Comonomer, ausgewählt aus 1-Buten, 1-Hexen oder 1-Octen, und einen Comonomer-Gehalt von 0,3 bis 7,0 Gew.-%.

6. Coextrudierte Folienstruktur nach einem der vorstehenden Ansprüche 1 bis 4, wobei die Schicht A ein In-situ-Gemisch von a-1) und a-5) umfasst, wobei Ethylen und mindestens ein Comonomer in Gegenwart eines Single-Site- (Metallocen-) Katalysators in mindestens einem Reaktor, und weiter in Gegenwart eines Single-Site- (Metallocen-) Katalysators oder Katalysators vom Ziegler-Natta-Typ in mindestens einem anderen Reaktor polymerisiert werden, wobei die Menge von a-1), dem Plastomer auf Ethylen-Basis, im Bereich von 20 bis 60 Gew.-% von Schicht A liegt, und die Menge von a-5), dem PE, im Bereich von 80 bis 40 Gew.-% von Schicht A liegt.

7. Coextrudierte Folienstruktur nach einem der vorstehenden Ansprüche 1 bis 6, wobei Schicht B eine Menge von b-1), dem Autoklaven- oder Röhren-LDPE, im Bereich von 50 bis 90 Gew.-% von Schicht B, und eine Menge von b-2), dem PE, im Bereich von 10 bis 50 Gew.-% von Schicht B umfasst.

8. Coextrudierte Folienstruktur nach einem der vorstehenden Ansprüche 1 bis 7, wobei die Folienstruktur weiter eine Schicht C umfasst, bei der es sich um eine Sperrschicht handelt, wobei Schicht C besteht aus
100 Gew.-% Plastomer auf Ethylen-Basis, wie für a-1) definiert, oder
einem Gemisch des mit einem Ziegler-Natta-Katalysator hergestellten bimodalen PE, wie für b-2) definiert, und eines Plastomers auf Ethylen-Basis, wie für a-1) definiert, oder
einem Gemisch des LDPE, wie für a-4) definiert, und des Plastomers auf Ethylen-Basis, wie für a-1) definiert,
wobei in den Gemischen das Plastomer in einer Menge von 20 bis 80 Gew.-% vorliegt.

9. Verwendung einer coextrudierten Folienstruktur nach einem der vorstehenden Ansprüche 1 bis 8, als Kollationsschrumpffolie.

10. Verwendung nach Anspruch 9, wobei die Kollationsschrumpffolie in einem Verfahren zum Kollationsschrumpfverpacken eines Objekts verwendet wird, das eine Vielzahl von vorzugsweise im Wesentlichen gleichen Artikeln umfasst.

11. Verfahren zum Kollationsschrumpfverpacken eines Objekts, **gekennzeichnet durch**:
(i) Erhalten einer Kollationsschrumpffolie, die eine coextrudierte Folienstruktur nach einem der Ansprüche 1 bis 8 umfasst, wobei es sich bei der Folienstruktur um eine verstreckte Folie handelt, die in der Maschinenrichtung (MD) in einem Streckverhältnis von mindestens 1:1,5 uniaxial gereckt ist,
(ii) Verpacken des Objekts, das eine Vielzahl von einzelnen Artikeln, vorzugsweise im Wesentlichen gleichen Artikeln umfasst, in der Kollationsschrumpffolie, und
(iii) Erhitzen des in der Folie verpackten Objekts, um die Folie um das Objekt als Bündel herum zu schrumpfen.

12. Kollationsschrumpfverpackte Strukturen, die eine coextrudierte Folienstruktur nach einem der Ansprüche 1 bis 8 umfassen, welche um mehrere Artikel herum gepackt ist.

## Revendications

1. Structure de film coextrudé comprenant au moins deux couches A et B à base de polyéthylène, selon laquelle la couche A est une couche d'étanchéité comprenant un mélange de a-1) et de a-4) et/ou de a-5) avec
a-1) étant un plastomère à base d'éthylène ayant une masse volumique de 860 kg/m³ à 915 kg/m³ (ISO 1183)
a-4) étant un homopolymère de polyéthylène basse densité tubulaire ou autoclave ayant une masse volumique de 905 kg/m³ à 940 kg/m³ (ISO 1183) et
a-5) étant un polymère de polyéthylène comprenant de l'éthylène et au moins un comonomère d'alpha-oléfine en C₄ à C₂₀ et présentant une masse volumique de 900 kg/m³ à 960 kg/m³ (ISO 1183)
et la couche B comprenant un mélange de
b-1) un polyéthylène basse densité tubulaire ou autoclave ayant une masse volumique de 905 kg/m³ à 940 kg/m³ (ISO 1183) et
b-2) un polymère de polyéthylène comprenant de l'éthylène et au moins un comonomère d'alpha-oléfine en C₄ à C₂₀ et présentant une masse volumique de 900 kg/m³ à 960 kg/m³ (ISO 1183).
selon laquelle la structure de film coextrudé est orientée dans le sens machine à un rapport d'étirage de 1:1,5 à 1:15 et présentant une épaisseur de film après orientation de 10 à 50 µm et
selon laquelle la structure de film coextrudé, orientée dans le sens machine, présente les propriétés (i) à (v) suivantes
(i) un module de traction (selon l'ISO 527-3) dans le sens machine mesuré sur un film soufflé orienté de façon uniaxiale de 25 µm et de 40 µm à température ambiante d'au moins 400 MPa
ii) un module de traction (selon l'ISO 527-3) dans le sens transversal mesuré sur un film soufflé orienté de façon uniaxiale de 25 µm et de 40 µm à température ambiante d'au moins 600 MPa
iii) une résistance à la déchirure (selon l'ISO 6383-1, procédé de déchirure de pantalon) dans le sens machine et dans le sens transversal mesurée sur un film soufflé orienté de façon uniaxiale de 25 µm et de 40 µm à température ambiante d'au moins 70 N/mm et/ ou
une différence de la résistance à la déchirure dans le sens machine et dans le sens transversal de tels films de pas plus de 100 N/mm
iv) une brillance (45°) selon l'ASTM D2457 mesurée sur un film soufflé orienté de façon uniaxiale de 25 µm d'au moins 60 % et mesurée sur un film soufflé orienté de façon uniaxiale de 40 µm d'au moins 50 % et
v) un trouble selon l'ASTM D1003 mesuré sur un film soufflé orienté de façon uniaxiale de 25 µm inférieur à 10 % et mesuré sur un film soufflé orienté de façon uniaxiale de 40 µm inférieur à 15 %.

2. Structure de film coextrudé selon la revendication 1, dans laquelle le plastomère à base d'éthylène a-1) de la couche A est **caractérisé en outre par**
un MFR₂ (ISO 1133 ; 190 °C, 2,16 kg) dans la plage allant de 0,5 à 30 g/10 min,
un point de fusion (mesuré par DSC selon l'ISO 11357-3:1999) inférieur à 130 °C,
un comonomère sélectionné parmi le 1-butène, le 1-hexène ou le 1-octène et
une teneur en éthylène de 60 à 95 % en poids.

3. Structure de film coextrudé selon la revendication 1, dans laquelle le polymère de polyéthylène a-5) est produit avec un catalyseur métallocène et est **caractérisé en outre par**
un MFR₂ (ISO 1133 ; 190 °C, 2,16 kg) dans la plage allant de 0,01 à 20 g/10 min,
au moins un comonomère sélectionné parmi le 1-butène, le 1-hexène ou le 1-octène et
une teneur en comonomère de 0,3 à 7,0 % en poids.

4. Structure de film coextrudé selon l'une quelconque des revendications 1 à 3 précédentes, dans laquelle la couche A comprend soit un mélange de a-1) et de a-4) dans laquelle la quantité de a-1), le plastomère à base d'éthylène, est dans la plage allant de 20 à 60 % en poids de la couche A et la quantité de a-4), le LDPE autoclave ou tubulaire, est dans la plage allant de 80 à 40 % en poids de la couche A, ou
un mélange de a-1) et de a-5) dans laquelle la quantité de a-1), le plastomère à base d'éthylène, est dans la plage allant de 10 à 50 % en poids de la couche A et la quantité de a-5), le PE, est dans la plage allant de 90 à 50 % en poids de la couche A.

5. Structure de film coextrudé selon l'une quelconque des revendications 1 à 4 précédentes, dans laquelle le polymère de polyéthylène b-2) est produit avec un catalyseur de Ziegler-Natta et est en outre **caractérisé par**
un MFR₂ (ISO 1133 ; 190 °C, 2,16 kg) dans la plage allant de 0,01 à 20 g/10 min,
au moins un comonomère sélectionné parmi le 1-butène, le 1-hexène ou le 1-octène et
une teneur en comonomère de 0,3 à 7,0 % en poids.

6. Structure de film coextrudé selon l'une quelconque des revendications 1 à 4 précédentes, dans laquelle la couche A comprend un mélange in situ de a-1) et de a-5), selon laquelle de l'éthylène et au moins un comonomère sont polymérisés en présence d'un catalyseur monosite (métallocène) dans au moins un réacteur et en outre en présence d'un catalyseur de type monosite (métallocène) ou Ziegler-Natta dans au moins un autre réacteur, selon laquelle la quantité de a-1), le plastomère à base d'éthylène, est dans la plage allant de 20 à 60 % en poids de la couche A, et la quantité de a-5), le PE, est dans la plage allant de 80 à 40 % en poids de la couche A.

7. Structure de film coextrudé selon l'une quelconque des revendications 1 à 6, dans laquelle la couche B comprend une quantité de b-1), le LDPE autoclave ou tubulaire, dans la plage allant de 50 à 90 % en poids de la couche B, et une quantité de b-2), le PE, dans la plage allant de 10 à 50 % en poids de la couche B.

8. Structure de film coextrudé selon l'une quelconque des revendications 1 à 7 précédentes, dans laquelle la structure de film comprend en outre une couche C, qui est une couche de blocage, selon laquelle la couche C est composée de 100 % en poids d'un plastomère à base d'éthylène tel que défini pour a-1) ou d'un mélange du PE bimodal produit avec un catalyseur de Ziegler Natta, tel que défini pour b-2, et d'un plastomère à base d'éthylène tel que défini pour a-1) ou d'un mélange du LDPE, tel que défini pour a-4), et du plastomère à base d'éthylène tel que défini pour a-1),
selon laquelle dans les mélanges le plastomère est présent en une quantité de 20 à 80 % en poids.

9. Utilisation d'une structure de film coextrudé selon l'une quelconque des revendications 1 à 8 précédentes, en tant que film rétractable de regroupement.

10. Utilisation selon la revendication 9, selon laquelle le film rétractable de regroupement est utilisé dans un procédé d'emballage de regroupement par rétractation d'un objet qui comprend une pluralité d'articles de préférence sensiblement identiques.

11. Procédé d'emballage de regroupement par rétractation d'un objet **caractérisé par** :
(i) l'obtention d'un film rétractable de regroupement comprenant une structure de film coextrudé selon l'une quelconque des revendications 1 à 8, ladite structure de film étant un film étiré qui est orienté de façon uniaxiale dans le sens machine (MD) à un rapport d'étirage d'au moins 1:1,5 ;
(ii) l'emballage dudit objet comprenant une pluralité d'articles individuels, de préférence des articles sensiblement identiques, dans ledit film rétractable de regroupement et
(iii) le chauffage dudit objet emballé dans le film pour la rétraction de regroupement dudit film autour dudit objet.

12. Structures emballées par rétractation de regroupement comprenant une structure de film coextrudé selon l'une quelconque des revendications 1 à 8 enroulée autour de divers articles.
